**Europäisches Patentamt**

**European Patent Office**

**Office européen des brevets**

(19)

(11) Veröffentlichungsnummer: **0 177 518**
**B1**

(12)

# EUROPÄISCHE PATENTSCHRIFT

(45) Veröffentlichungstag der Patentschrift:
10.08.88

(51) Int. Cl.⁴: **F 16 L 5/02,** H 01 B 17/30

(21) Anmeldenummer: **85901370.8**

(22) Anmeldetag: **28.03.85**

(86) Internationale Anmeldenummer:
**PCT/DE 85/00093**

(87) Internationale Veröffentlichungsnummer:
**WO 85/04461 (10.10.85 Gazette 85/22)**

(54) **DICHTKÖRPER FÜR EINE DURCHFÜHRUNG FÜR MINDESTENS EINE LEITUNG DURCH EINE WANDÖFFNUNG.**

(30) Priorität: **03.04.84 DE 3412400**

(43) Veröffentlichungstag der Anmeldung:
**16.04.86 Patentblatt 86/16**

(45) Bekanntmachung des Hinweises auf die Patenterteilung:
**10.08.88 Patentblatt 88/32**

(84) Benannte Vertragsstaaten:
**AT BE CH DE FR GB IT LI NL SE**

(56) Entgegenhaltungen:
**DE-C-1 166 567**
**FR-A-1 252 812**
**US-A-3 091 795**
**US-A-4 081 879**

(73) Patentinhaber: **Hauff, Werner, Herlsbühlstrasse 19, D-7925 Dischingen- Ballmertshofen (DE)**

(72) Erfinder: **Hauff, Werner, Herlsbühlstrasse 19, D-7925 Dischingen- Ballmertshofen (DE)**

(74) Vertreter: **Fay, Hermann, Dipl.- Phys. Dr., Ensingerstrasse 21 Postfach 1767, D-7900 Ulm (Donau) (DE)**

## Beschreibung

Die Erfindung betrifft einen Dichtkörper für eine Durchführung für mindestens eine Leitung, insbesondere ein elektrisches Kabel, durch eine Wandöffnung, wobei der zumindest teilweise elastische Dichtkörper den Leerraum zwischen der Leitung und der Laibung der Wandöffnung ausfüllt, eine dem Leitungsquerschnitt entsprechende Leitungsaufnahme bildet und durch Verpressen in der Wandöffnung einerseits gegen die Leitung, andererseits gegen die Laibung der Wandöffnung abdichtet, und wobei der Dichtkörper aus zwei im wesentlichen quer zur Achse der Wandöffnung voneinander getrennten und in der Trennfläche formschlüssig zusammengesetzten Teilen besteht, von welchen das eine Teil eine Aussparung aufweist und das andere Teil in die Aussparung greift.

Bei einem aus der US-A-3 091 795 bekannten Dichtkörper dieser Art sind beide Dichtkörperteile identisch ausgebildet. Sie bestehen je aus einem Ringteil, an das sich mehrere über den Ringumfang verteilte, axial erstreckende Zungen anschließen, zwischen welchen die axial bis in den Ringteil reichenden Aussparungen vorgesehen sind. Beide Dichtkörperteile bilden daher längs ihres Umfangs abwechselnd an ihren Zungen die der Laibung der Wandöffnung anliegende Dichtfläche. Beide Dichtkörperteile sind im übrigen bezüglich ihrer elastischen Eigenschaften vergleichsweise steif ausgebildet, da die Zungen auch dann für die Montage des Dichtkörpers in der Wandöffnung ausreichend elastisch verformbar sind und die Frage eines dichten Abschlusses gegen die Wand, wenn überhaupt, nur eine geringe Rolle spielt, weil der bekannte Dichtkörper in erster Linie eine elektrische Isolation des Randes der Wandöffnung sicher stellen soll.

Soweit andere Durchführungen und Dichtkörper dazu dienen, einen Feuerschutzabschluß zu bilden, durch den Leitungstrassen zwischen verschiedenen, durch die Wand voneinander getrennten Brandabschnittzonen feuerbeständig abgeschottet werden, und dazu außer einer möglichst langen Feuerwiderstandsdauer auch die Eigenschaft einer möglichst guten Abdichtung gegen Wasser, Gas und Rauch besitzen sollen, bestehen aus der Praxis bekannte Dichtkörper aus einem Kunstkautschuk, wie Neopren oder Chloropren, dem zur Erzielung der gewünschten Feuerwiderstandsdauer Flammschutzmittel, Blähmittel und dergl. beigefügt sind. Jedoch führt die Beimischung dieser Zusätze zu sehr starken Beeinträchtigungen der technischen Werte der Kautschukmischung. Insbesondere ergibt sich eine elastisch sehr harte Einstellung des Kautschuks, und zwar schon bei vergleichsweise nur geringen Zusatzmengen. Werden daher der Kautschukmischung die Zusätze in einer im Hinblick auf die Feuerwiderstandsdauer an sich gewünschten Menge zugegeben, so wird dadurch der Dichtkörper in der Regel elastisch so hart, daß er keine ausreichende Abdichtung gegen Wasser, Gas und Rauch mehr ermöglicht, da hierfür ein elastisch möglichst weich eingestellter Kautschuk erforderlich ist, damit sich der Dichtkörper beim Verpressen in der Wandöffnung dichtschließend an die Leitung bzw. die Laibung der Wandöffnung anlegen kann. Mit derartigen Zusätzen versehene Kautschukmischungen sind im übrigen teuer, da die Einarbeitung der Zusätze in die Kautschukmischung verfahrenstechnisch erheblichen Aufwand erfordert, was zu hohen Preisen für derartige Kautschukspezialmischungen führt. Schließlich erfordern solche bezüglich ihrer Abmessungen in der Regel verhältnismäßig dickwandigen Dichtkörper lange Vulkanisationszeiten, so daß die Formen, in welchen die Dichtkörper vulkanisiert werden, entsprechend lange belegt sind, was ebenfalls ihre Herstellung verteuert.

Der Erfindung liegt die Aufgabe zugrunde, einen Dichtkörper der eingangs genannten Art so auszubilden, daß für seine Herstellung eine möglichst geringe Menge der mit Zusätzen für eine lange Feuerwiderstandsdauer versehenen Kautschukspezialmischung benötigt und trotz großer Mengen dieser beigemischten Zusätze die Dichtfähigkeit des Dichtkörpers nicht beeinträchtigt wird.

Diese Aufgabe wird nach der Erfindung dadurch gelöst, daß nur das aus einem elastisch weich eingestellten Kautschuk bestehende, die Aussparung aufweisende Teil des Dichtkörpers die der Laibung der Wandöffnung anliegende Dichtfläche trägt und das aus einem durch Zugabe von Flammschutzmitteln oder dergl. elastisch hart eingestellten Kautschuk bestehende andere Teil in der Aussparung des weich elastischen Teils axial und auch an der Umfangsfläche einer die Aussparung nach außen begrenzenden Ringschulter radial anliegt.

In bevorzugter Ausführungsform bestehen die beiden Dichtkörperteile aus einem Chloropren-Kautschuk, wobei das elastisch weich eingestellte Teil eine Shore-Härte von maximal 55° oder weniger, das elastisch hart eingestellte Teil eine solche von mindestens 60° oder mehr hat. Dabei ist im übrigen die Anordnung so getroffen, daß das elastisch hart eingestellte Dichtkörperteil sich an der der Wandaußenseite zugewandten Dichtkörperseite befindet und das elastisch weich eingestellte Teil innerhalb der Wandöffnung liegt. Dies bedeutet bei einem Dichtkörper mit kegelig verlaufender Dichtfläche, der also mit der Richtung der Kegelverjüngung voran in die Wandöffnung verpreßt wird, daß der elastisch hart eingestellte Dichtkörperteil auf der im Durchmesser größeren Seite des Dichtkörpers angeordnet ist.

Durch die Erfindung wird erreicht, daß nur noch für einen Teil des Dichtkörpers, nämlich den elastisch hart eingestellten Teil die sehr teure Kautschuk-Spezialmischung benötigt wird, während das andere, die Dichtfläche und in ausreichender axialer Länge auch die Leitungsaufnahmen aufweisende Teil aus einer normalen, wesentlich billigeren Gummimischung besteht, die elastisch so weich ist, daß sie beim Verpressen des Dichtkörpers in der Wandöffnung die einwandfreie Abdichtung gegenüber der Leitung einerseits und der Laibung der Wandöffnung andererseits gewährleistet. Dieses elastisch weich eingestellte Teil des Dichtkörpers ist somit zuständig für die Gas-, Rauch- und Wasserdichtheit der Durchführung, der elastisch hart eingestellte Teil dagegen bestimmt die Brandschutzwirkung und die Feuerwiderstandsdauer. Dieses Teil, das somit keine Dichtfunktion zu erfüllen hat, kann daher elastisch hart und entsprechend hoch mit Zusätzen angereichert sein, welche die gewünschte Feuerwiderstandsdauer ermöglichen. Gleichzeitig aber erfüllt dieses elastisch hart eingestellte Teil die Funktion einer mechanischen Stabilisierung des elastisch weich eingestellten Teiles, das mit seiner Aussparung gleichsam nach Art einer Kappe auf dem mechanisch stabilen, elastisch harten Teil sitzt. Die Wandstärke dieses elastisch hart eingestellten Teiles ist nicht etwa nur nach Festigkeitsgesichtspunkten, sondern vor allem auch nach der gewünschten Feuerwiderstandsdauer zu wählen. Im Brandfall brennt das elastisch hart eingestellte Teil mit der Zeit ab. Dieses Teil braucht daher nur so dick gewählt zu werden, wie sein Abbrand während der jeweils gewünschten Feuerwiderstandsdauer tatsächlich stattfindet. Eine darüber hinausgehende Dicke des elastisch hart eingestellten Teiles ist unter dem Gesichtspunkt des Feuerschutzes sinnlos und wurde den Dichtkörper wegen der dann erforderlichen größeren Menge der teuren Kautschuk-Spezialmischung nur unnötig verteuern. Andererseits hat die elastisch weiche Einstellung des innerhalb der Wandöffnung liegenden Dichtkörperteiles die vorteilhafte Wirkung, daß bei elektrischen Kabeln als Leitungen im Brandfall die bei üblichen Dichtkörpern sonst regelmäßig am Kabelaustritt aus dem Dichtkörper auf der dem Brand abgewandten Dichtkörperseite auftretenden Kabelmantelrisse zeitlich wesentlich hinausgezögert, wenn nicht sogar ganz vermieden werden können. Diese Kabelmantelrisse haben ihre Ursache darin, daß sich das Kabel unter dem Einfluß der Wärme der metallischen Kabelseele auszudehnen versucht, die üblichen, auch im Bereich des Kabelaustritts elastisch harten Dichtkörper diesem sich aufbauenden Innendruck im Kabel aber nicht ausreichend nachgeben können und daher an der Austrittsmündung mit dem Mündungsrand der Kabelaufnahme eine abscherende Wirkung auf den Kabelmantel ausüben. Der erfindungsgemäße Dichtkörper mit seiner elastisch viel weicheren Einstellung an der Austrittsseite des Kabels kann dagegen im Mündungsbereich der Kabelaufnahme dem wachsenden Innendruck des Kabels elastisch nachgeben und sich der Kabelerweiterung anpassen, so daß scharfe Scherwirkungen auf den Kabelmantel vermieden werden. Ein weiterer, besonders für die Herstellung wesentlicher Vorteil des erfindungsgemäßen Dichtkörpers ist darin zu sehen, daß seine beiden Teile getrennt voneinander ausvulkanisiert werden und dabei wegen ihrer geringeren Wandstärken eine erheblich geringere Vulkanisationszeit als ein einstückiger und entsprechend dickerwandiger Dichtkörper benötigen.

Die Feuerwiderstandsdauer des erfindungsgemäßen Dichtkörpers kann im übrigen noch dadurch wesentlich verbessert werden, daß im elastisch hart eingestellten Dichtkörperteil mit Flammschutzmitteln gefüllte Hohlräume vorgesehen sind, die über entlang der Trennfläche verlaufende Kanäle mit der Leitungsaufnahme in Verbindung stehen. Die Flammschutzmittel werden erst nach vollständiger Fertigstellung und Ausvulkanisierung des elastisch hart eingestellten Dichtkörpers in dessen Hohlräume eingefüllt, so daß ein vorzeitiger thermischer Abbau dieser Flammschutzmittel beim Vulkanisieren ausgeschlossen ist. Auf diese Weise kann die Menge der Flammschutzmittel wesentlich erhöht werden, da sie nur noch durch die Größe der zu ihrer Aufnahme zur Verfügung stehenden Hohlräume begrenzt ist. Darüber hinaus können durch die Art der Anordnung und Ausbildung dieser Hohlräume die Flammschutzmittel gezielt und bereichsweise sehr konzentriert an die im Brandfall besonders kritischen Stellen der Durchführung zur Wirkung kommen, nämlich durch die Kanäle hindurch unmittelbar in den thermisch am stärksten belasteten Leitungsaufnahmen. Im Hinblick auf die mögliche Menge der Flammschutzmittel empfiehlt es sich, daß die Hohlräme durch sich gegen das elastisch weich eingestellte Dichtkörperteil erstreckende Ringkragen des elastisch hart eingestellten Teiles vergrößert und im elastisch weich eingestellten Teil Aufnahmen für die Ringkragen vorgesehen sind. In den Ringkragen können sich die Hohlräume mit den Kanälen verbindende Öffnungen befinden. Weiter empfiehlt es sich, daß die Kanäle in eine die Leitungsaufnahme umschließende Ringnut münden, von der andernends geschlossene Axialnuten in der Umfangsfläche der Leitungsaufnahme im elastisch hart eingestellten Dichtkörperteil ausgehen. Durch die Kanäle, die Ringnuten und die Axialnuten wird erreicht, daß sich die in der Hitze des Brandfalles aus den Flammschutzmitteln freiwerdenden gasförmigen, feuererstickend und -hemmend wirkenden Zersetzungsprodukte in der Leitungsaufnahme über den Leitungsumfang und die Länge der Leitungsaufnahme verteilen und dadurch unmittelbar an der Leitung wirksam werden können.

Im folgenden wird die Erfindung an in der Zeichnung dargestellten Ausführungsbeispielen näher erläutert; es zeigen:

Fig. 1   eine Stirnansicht eines Dichtkörpers nach der Erfindung,

Fig. 2   einen Schnitt in Richtung II - II durch den Dichtkörper nach Fig. 1,

Fig. 3   einen Schnitt in Richtung III - III durch den Dichtkörper nach Fig. 1 in voneinander getrenntem Zustand der beiden Dichtkörperteile,

Fig. 4   eine andere Ausführungsform des erfindungsgemäßen Dichtkörpers in einer der Fig. 1 entsprechenden Darstellung,

Fig. 5   einen Schnitt in Richtung V - V durch den Dichtkörper nach Fig. 5, und

Fig. 6   einen Schnitt in Richtung VI - VI durch den Dichtkörper nach Fig. 4 in einer der Fig. 3 entsprechenden Darstellung.

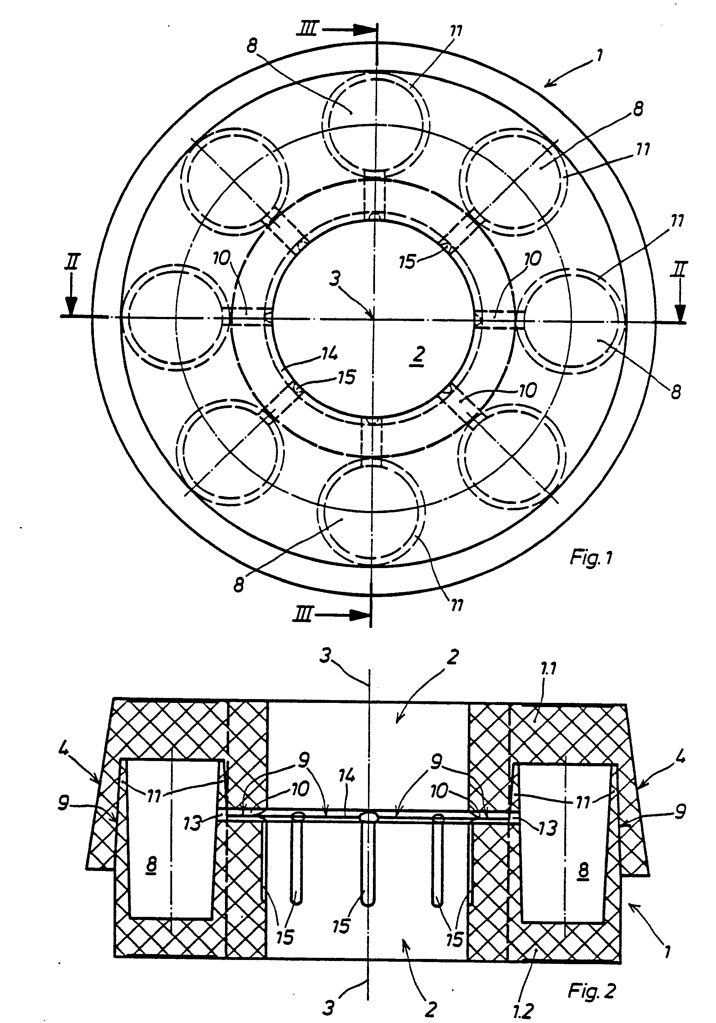

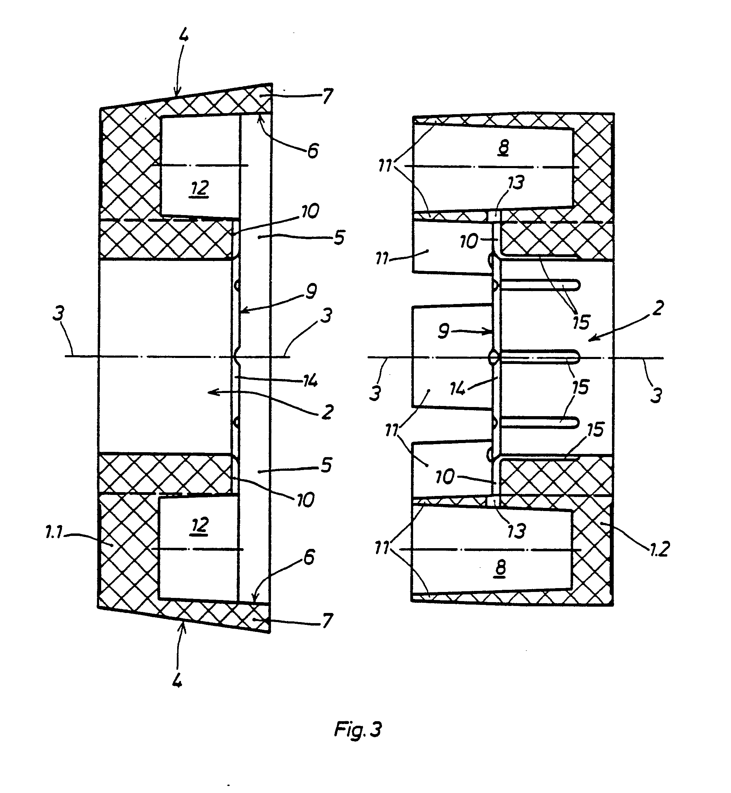

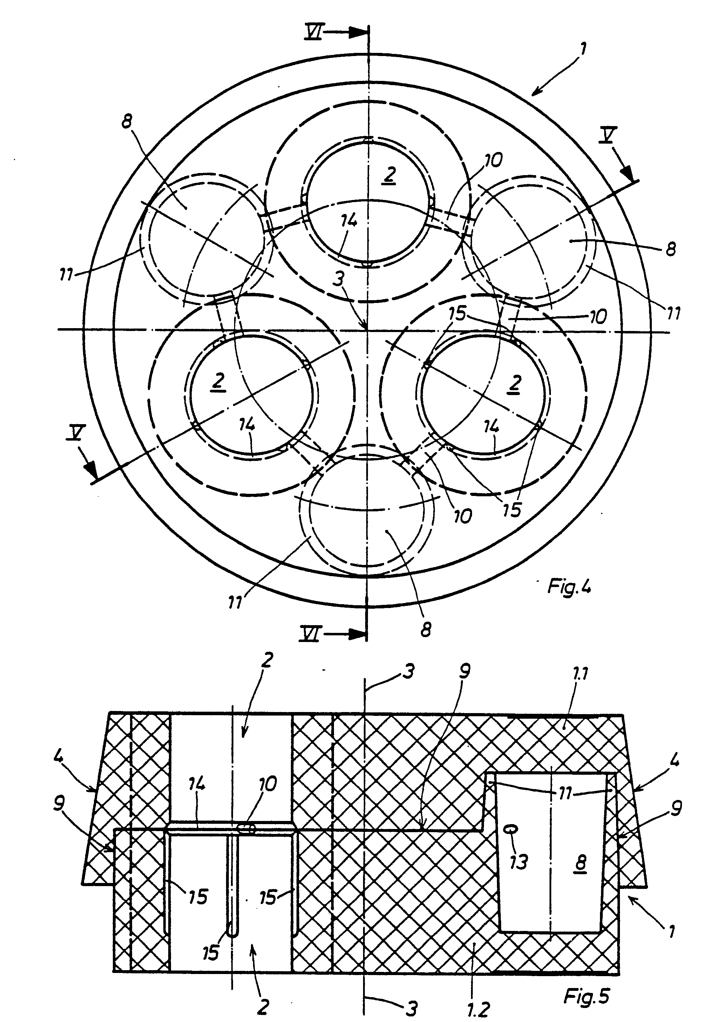

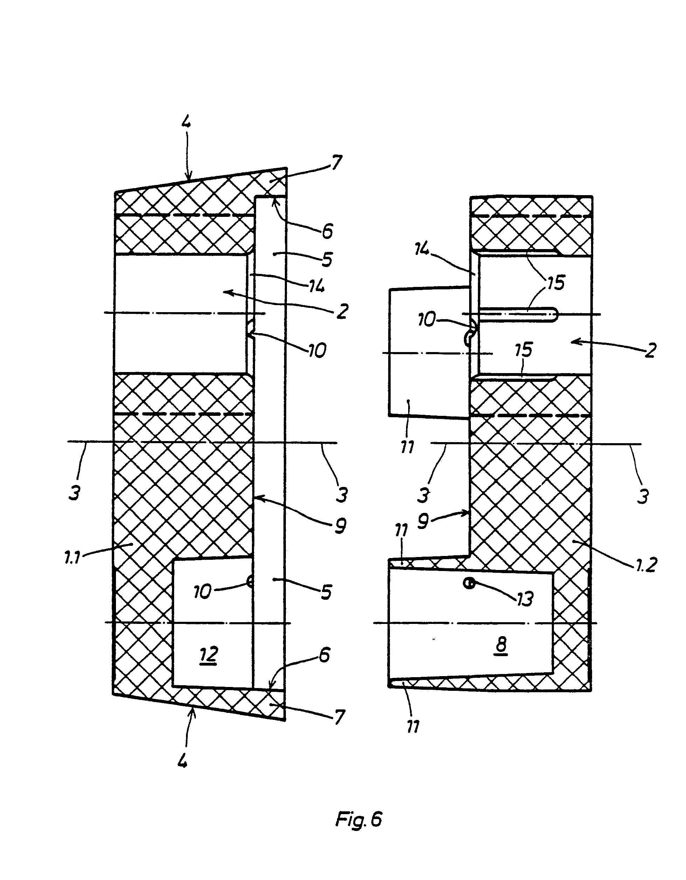

Die Dichtkörper 1 sind Teil einer im Übrigen nicht dargestellten Durchführung für elektrische Kabel durch eine ebenfalls nicht dargestellte Wandöffnung, wobei der Dichtkörper 1 den Leerraum zwischen der Leitung und der Laibung der Wandöffnung ausfüllt. Im Ausführungsbeispiel nach den Fig. 1 bis 3 besitzt der Dichtkörper 1 eine Leitungsaufnahme 2 für nur eine einzige Leitung, im Ausführungsbeispiel nach den Fig. 4 bis 6 dagegen insgesamt drei Leitungsaufnahmen 2. Diese Leitungsaufnahmen 2 sind dem jeweiligen Leitungsquerschnitt angepaßt, so daß der Dichtkörper 1 beim Verpressen in der Wandöffnung einerseits gegen die Leitungen, andererseits gegen die Laibung der Wandöffnung elastisch abdichtet.

In allen gezeigten Ausführungsbeispielen besteht der Dichtkörper 1 aus zwei im wesentlichen quer zur Achse der Wandöffnung, in der Zeichnung also quer zur Achse 3 der Dichtkörper 1 voneinander getrennten und in der Trennfläche 9 formschlüssig zusammengesetzten Teilen 1.1, 1.2. Das eine Teil 1.1 besteht aus einem elastisch weich eingestellten, keine oder nur geringe Zusätze aufweisenden und daher preiswerten Kautschuk und trägt die der Laibung der Wandöffnung anliegende Dichtfläche 4. Das andere Teil 1.2 besteht aus einem durch Zugabe von Flammschutzmitteln und dergl. elastisch hart eingestellten Kautschuk und greift in eine Aussparung 5 des weich elastischen Teiles 1.1, dem es in der Aussparung 5 sowohl axial wie auch in der Umfangsfläche einer die Aussparung 5 nach außen begrenzenden Ringschulter 6 radial anliegt. Das elastisch harte Teil 1.2 stabilisiert daher mechanisch das elastisch weich eingestellte Teil 1.1 und verhindert insbes., daß im Bereich der Ringschulter 6 der zwischen dieser Ringschulter 6 und der Dichtfläche 4 verbleibende Ringteil 7 beim Verpressen oder Wandöffnung radial nach innen ausweichen kann. Gleichzeitig nimmt das elastisch hart eingestellte Teil 1.2 in axialer Richtung über die Durchführung bestehende Druckdifferenzen mechanisch auf, so daß sich das elastisch weich eingestellte Teil 1.1 unter der Wirkung solcher Druckdifferenzen nicht durchwölben kann. Im Ergebnis erfüllt das elastisch weich eingestellte Teil 1.1 die Dichtfunktion gegenüber den Leitungen einerseits und der Laibung der Wandöffnung andererseits, das elastisch hart eingestellte Teil 1.2 dagegen die Funktionen der mechanischen Stabilisierung und des Feuerschutzes bzw. der Feuerhemmung.

Die beiden Dichtkörperteile 1.1, 1.2 können aus einem Chloropren-Kautschuk bestehen. Das elastisch weich eingestellte Teil 1.1 sollte eine Shore-Härte von unter 55°, das elastisch hart eingestellte Teil 1.2 eine Shore-Härte von über 60° haben. Da das elastisch hart eingestellte Dichtkörperteil 1.2 in Folge seiner Flammschutzmittelzusätze die feuerschützende und feuerhemmende Wirkung erfüllen muß, befindet es sich an der der Wandaußenseite zugewandten Dichtkörperseite, die im Brandfall also dem Feuer zugekehrt ist. Das elastisch weich eingestellte Teil 1.1 des Dichtkörpers 1 liegt dagegen innerhalb der Wandöffnung. Bei den in der Zeichnung dargestellten Ausführungsbeispielen von Dichtkörpern 1 mit kegelig verlaufender Dichtfläche 4 ist somit das elastisch hart eingestellte Dichtkörperteil 1.2 auf der im Durchmesser größeren Seite des Dichtkörpers 1 angeordnet.

Im übrigen zeigen die Ausführungsbeispiele den Fall, daß im elastisch hart eingestellten Dichtkörperteil 1.2 mit selbst nicht dargestelltem Flammschutzmittel gefüllte Hohlräume 8 vorgesehen sind, die über entlang der Trennfläche 9 verlaufende Kanäle 10 mit den Leitungsaufnahmen 2 in Verbindung stehen. Die Hohlräume 8 sind durch sich gegen das elastisch weich eingestellte Dichtkörperteil 1.1 erstreckende Ringkragen 11 des elastisch hart eingestellten Teiles 1.2 vergrößert. Für diese Ringkragen 11 sind im elastisch weich eingestellten Teil 1.1 entsprechende Aufnahmen 12 vorgesehen. Zur Verbindung der Hohlräume 8 einerseits und der Kanäle 10 andererseits dienen in den Ringkragen 11 befindliche Öfnungen 13. Im übrigen münden die Kanäle 10 in eine jeweils die Leitungsaufnahmen 2 umschließende Ringnuten 14, von welchen andernends geschlossene Axialnuten 15 ausgehen, die sich in der Umfangsfläche der Leitungsaufnahmen 2 im elastisch hart eingestellten Dichtkörperteil 1.2 erstrecken, so daß die im Brandfall bei der Zersetzung der Flammschutzmittel entstehende Gase aus den Hohlräumen 8 in die Leitungsaufnahmen 2 gelangen und sich über den Umfang der Leitungsaufnahmen verteilen können.

**Patentansprüche**

1. Dichtkörper für eine Durchführung für mindestens eine Leitung, insbesondere ein elektrisches Kabel, durch eine Wandöffnung, wobei der zumindest teilweise elastische Dichtkörper (1) den Leerraum zwischen der Leitung und der Laibung der Wandöffnung ausfüllt, eine dem Leitungsquerschnitt entsprechende Leitungsaufnahme (2) bildet und durch Verpressen in der Wandöffnung einerseits gegen die Leitung, andererseits gegen die Laibung der Wandöffnung abdichtet, wobei der Dichtkörper (1) aus zwei im wesentlichen quer zur Achse (3) der Wandöffnung voneinander getrennten und in der Trennfläche (9) formschlüssig zusammengesetzten Teilen (1.1, 1.2) besteht, von welchen das eine Teil (1.1) eine Aussparung (5) aufweist und das andere Teil (1.2) in die Aussparung (5) greift, dadurch gekennzeichnet, daß nur das aus einem elastisch weich eingestellten Kautschuk bestehende, die Aussparung (5) aufweisende Teil (1.1) die der Laibung der Wandöffnung anliegende Dichtfläche (4) trägt und das aus einem durch Zugabe von Flammschutzmitteln und dergl. elastisch hart eingestellten Kautschuk bestehende andere Teil (1.2) in der Aussparung (5) des weich eingestellten Teils (1.1) axial und auch an der Umfangsfläche einer die Aussparung (5) nach außen begrenzenden Ringschulter (6) radial anliegt.

2. Dichtkörper nach Anspruch 1, dadurch gekennzeichnet, daß die beiden Dichtkörperteile (1.1, 1.2) aus einem Chloropren-Kautschuk bestehen und das elastisch weich eingestellte Teil (1.1) eine Shore-Härte von maximal 55° oder weniger, das elastisch hart eingestellte Teil (1.2) eine solche von mindestens 60° oder mehr hat.

3. Dichtkörper nach Anspruch 1 oder 2, dadurch gekennzeichnet, daß das elastisch hart eingestellte Dichtkörperteil (1.2) sich an der der Wandaußenseite zugewandten Dichtkörperseite befindet und das elastisch weich eingestellte Teil (1.1) innerhalb der Wandöffnung liegt.

4. Dichtkörper nach einem der Ansprüche 1 bis 3, dadurch gekennzeichnet, daß bei einem Dichtkörper (1) mit kegelig verlaufender Dichtfläche (4) das elastisch hart eingestellte Dichtkörperteil (1.2) auf der im Durchmesser größeren Seite des Dichtkörpers (1) angeordnet ist.

5. Dichtkörper nach einem der Ansprüche 1 bis 4, dadurch gekennzeichnet, daß im elastisch hart eingestellten Dichtkörperteil (1.2) mit Flammschutzmitteln gefüllte Hohlräume (8) vorgesehen sind, die über entlang der Trennfläche (9) verlaufende Kanäle (10) mit der Leitungsaufnahme (2) in Verbindung stehen.

6. Dichtkörper nach Anspruch 5, dadurch gekennzeichnet, daß die Hohlräume (8) durch sich gegen das elastisch weich eingestellte Dichtkörperteil (1.1) erstreckende Ringkragen (11) des elastisch hart eingestellten Teiles (1.2) vergrößert und im elastisch weich eingestellten Teil (1.1) Aufnahmen (12) für die Ringkragen (11) vorgesehen sind.

7. Dichtkörper nach den Ansprüchen 5 und 6, dadurch gekennzeichnet, daß in den Ringkragen (11) die Hohlräume (8) mit den Kanälen (10) verbindende Öffnungen (13) vorgesehen sind.

8. Dichtkörper nach einem der Ansprüche 5 bis 7, dadurch gekennzeichnet, daß die Kanäle (10) in eine die Leitungsaufnahme (2) umschließende Ringnut (14) münden, von der andernends geschlossene Axialnuten (15) in der Umfangsfläche der Leitungsaufnahme (2) im elastisch hart eingestellten Dichtkörperteil (1.2) ausgehen.

## Claims

1. A sealing member for a passage for passing at least one conduit, in particular an electrical cable, through an opening in a wall, wherein the at least partially elastic sealing member (1) fills the space between the conduit and the inside surface of the opening in the wall, forms a conduit receiving means (2) corresponding to the conduit cross-section and, by being pressed in the opening in the wall, provides a seal against the conduit on the one hand and against the inside surface of the opening in the wall on the other hand, wherein the sealing member (1) comprises two parts (1.1, 1.2) which are separate from each other substantially transversely with respect to the axis (3) of the opening in the wall and which are positively fitted together at the separation surface (9), one part (1.1) having a recess (5) and the other part (1.2) engaging into the recess (5) characterised in that only the part (1.1) which has the recess (5) and which comprises a rubber which is made elastically soft carries the sealing surface (4) which bears against the inside surface of the opening in the wall and the other part (1.2) which comprises a rubber which is made elastically hard by the addition of flame-proofing agents and the like is in contact in the recess (5) in the soft part (1.1) axially and also radially against the circumferential surface of an annular shoulder (6) which defines the recess (5) in an outward direction.

2. A sealing member according to claim 1 characterised in that the two sealing members parts (1.1, 1.2) comprise a chloroprene rubber and the part (1.1) which is made elastically soft has a Shore hardness of a maximum of 55° or less, while the part (1.2) which is made elastically hard has a Shore hardness of at least 60° or more.

3. A sealing member according to claim 1 or claim 2 characterised that the sealing member part (1.2) which is made elastically hard is at the side of the sealing member which is towards the outward side of the wall and the part (1.1) which is made elastically soft lies within the opening in the wall.

4. A sealing member according to one of claims 1 to 3 characterised in that, in the case of a sealing member (1) with a tapering sealing surface (4) the sealing member part (1.2) which is made elastically hard is arranged on the side of

ㅏ  .ling member (1), which is larger in diameter.

5. A sealing member according to one of claims 1 to 4 characterised in that provided in the sealing member part (1.2) which is made elastically hard are cavities (8) which are filled with flame-proofing agents and which communicate with the conduit receiving means (2) by way of passages (10) extending along the separation surface (9).

6. A sealing member according to claims 5 characterised in that the cavities (8) are increased in size by annular collar portions (11) of the part (1.2) which is made elastically hard, said collar portions extending towards the sealing member part (1.1) which is made elastically soft, and receiving means (12) for the annular collar portions (11) are provided in the part (1.1) which is made elastically soft.

7. A sealing member according to claims 5 and 6 characterised in that openings (13) connecting the cavities (8) to the passages (10) are provided in the annular collar portions (11).

8. A sealing member according to one of claims 5 to 7 characterised in that the passages (10) open into an annular groove (14) which is disposed around the conduit receiving means (2) and from which axial grooves (15) which are closed at the other end extend in the circumferential surface of the conduit receiving means (2) in the sealing member part (1.2) which is made elastically hard.


**Revendications**

1. Corps d'étanchéité pour le passage d'au moins une canalisation, en particulier un câble électrique, par une ouverture dans un mur, le corps d'étanchéité (1) élastique du moins en partie remplissant l'espace vide entre la canalisation et la surface intérieure de l'ouverture dans le mur, formant une traversée de canalisation (2) adaptée à la section de la canalisation et assurant l'étanchéité, par compression dans l'ouverture du mur, par rapport à la canalisation d'une part et par rapport à la surface intérieure de l'ouverture du mur d'autre part; et le corps d'étanchéité (1) se composant de deux éléments (1.1, 1.2) séparés l'un de l'autre sensiblement transversalement à l'axe (3) de l'ouverture du mur et assemblés à engagement positif dans la surface de séparation (9), l'un des éléments (1.1) présentant un évidement (5) et l'autre élément (1.2) s'engageant dans ledit évidement (5), caractérisé par le fait que seul l'élément (1.1) réalisé à partir d'un caoutchouc d'une grande élasticité et comportant l'évidement (5) porte la surface d'étanchéité (4) appliquée contre la surface intérieure de l'ouverture du mur et que l'autre élément (1.2) conformé en un caoutchouc dont l'élasticité est réduite par l'addition d'agents ignifuges et de produits analogues est appliqué axialement dans l'évidement (5) de l'élément (1.1) à grande élasticité et aussi radialement contre la surface circonférentielle d'un épaulement annulaire (6) qui délimite l'évidement (5) vers l'extérieur.

2. Corps d'étanchéité selon la revendication 1, caractérisé par le fait que les deux éléments (1.1, 1.2) du corps d'étanchéité sont réalisés en un caoutchouc chloroprène et que l'élément (1.1) de grande élasticité présente une dureté Shore maximale de 55° ou moins et que la dureté Shore de l'élément (1.2) à élasticité réduite est d'au moins 60° ou plus.

3. Corps d'étanchéité selon l'une des revendications 1 ou 2, caractérisé par le fait que l'élément (1.2) à élasticité réduite du corps d'étanchéité se trouve du côté du corps d'étanchéité dirigé vers le côté extérieur du mur et que l'élément (1.1) élastique se trouve à l'intérieur de l'ouverture du mur.

4. Corps d'étanchéité selon l'une quelconque des revendications 1 à 3, caractérisé par le fait que, pour un corps d'étanchéité (1) avec une surface d'étanchéité (4) conique, l'élément peu élastique (1.2) du corps d'étanchéité est disposé du côté du corps d'étanchéité (1) présentant un diamètre plus grand.

5. Corps d'étanchéité selon l'une quelconque des revendications 1 à 4, caractérisé par le fait que l'élément (1.2) du corps d'étanchéité à élasticité réduite comporte des cavités (8) remplies d'agents ignifuges qui communiquent avec la traversée de canalisation (2) par l'intermédiaire de canaux (10) qui s'étendent le long de la surface de séparation (9).

6. Corps d'étanchéité selon la revendication 5, caractérisé par le fait que les cavités (8) sont agrandies par des collerettes annulaires (11) de l'élément (1.2) à élasticité réduite qui s'étendent en direction de l'élément (1.1) du corps d'étanchéité présentant une élasticité plus grande et que des logements (12) sont prévus pour les collerettes annulaires (11) dans l'élément (1.1) plus élastique.

7. Corps d'étanchéité selon l'une des revendications 5 et 6, caractérisé par le fait que des ouvertures (13) reliant les cavités (8) aux canaux (10) sont prévues dans les collerettes annulaires (11).

8. Corps d'étanchéité selon l'une quelconque des revendications 5 à 7, caractérisé par le fait que les canaux (10) débouchent dans une rainure annulaire (14) qui entoure la traversée de canalisation (2) et d'où partent des rainures axiales (15), fermées à l'autre extrémité, dans la surface circonférentielle de la traversée de canalisation (2), dans l'élément (1.2) du corps d'étanchéité à élasticité réduite.

0 177 518

Fig. 1

Fig. 2

*Fig. 3*

0 177 518

Fig. 4

Fig. 5

Fig. 6